# NEUE EUROPÄISCHE PATENTSCHRIFT

(11) **EP 2 788 544 B2**
(45) Veröffentlichungstag und Bekanntmachung des Hinweises auf die Entscheidung über den Einspruch: **24.05.2023**
(45) Hinweis auf die Patenterteilung: 02.11.2016
(21) Anmeldenummer: 12799165.1
(22) Anmeldetag: 07.12.2012
(51) Int. Cl.: D21B 1/08, D21B 1/06, D21B 1/32

(54) **VERFAHREN ZUR ALTPAPIERAUFBEREITUNG**
METHOD FOR TREATING WASTE PAPER
PROCÉDÉ DE TRAITEMENT DE VIEUX PAPIERS

(30) Priorität: 09.12.2011 DE 102011120630
(43) Veröffentlichungstag der Anmeldung: 15.10.2014
(73) Patentinhaber: Aerocycle GmbH, 41468 Neuss (DE)
(72) Erfinder: KÜHNE, Thomas, 72581 Dettingen (DE); ALTHÖFER, Philipp, 41468 Neuss (DE)
(74) Vertreter: Paul & Albrecht Patentanwälte PartG mbB
(86) Internationale Anmeldenummer: PCT/EP2012/074809
(87) Internationale Veröffentlichungsnummer: WO 2013/083784

(56) Entgegenhaltungen:
- WO-A1-92/07991
- CH-A- 166 508
- CH-A5- 665 233
- FR-A- 519 934
- US-B1- 6 187 135

## Beschreibung

Die Erfindung betrifft die Verwendung eines Verfahrens zum Aufbereiten und zur Gewinnung von Fasern für die Papierherstellung oder die Herstellung von Dämmstoffen aus einem faserhaltigen Material, nämlich aus Altpapier, zur Aktenvernichtung.

Verfahren zur Aufbereitung von Altpapier sind bekannt. Dabei wird grundsätzlich Altpapier in gebündelter und gegebenenfalls gepresster Form zunächst in einem Pulper aufgelöst. Dafür wird der Pulper mit Wasser gefüllt. Anschließend wird das Altpapier oder der Zellstoff eingetragen und dort unter Einsatz eines Propellers aufgelöst und zerkleinert. Auch kann das Papier im Pulper ein De-Inking-Verfahren unter Einsatz von Chemikalien durchlaufen. Danach wird die Faserstoffsuspension abgepumpt und weiterverarbeitet. Die Stoffdichte (Trockenmasse Altpapier / (Trockenmasse Altpapier + Wasser)) bei normalen Pulpern beträgt etwa 5 %. Man kann Zellstoff auch mit Hochkonsistenzpulpern auflösen. Die erreichbare Stoffdichte liegt hier bei 12 bis 18%. Dabei löst sich das Gemisch besser auf, so dass man Energie und Platz sparen kann. Dies liegt daran, dass aufgrund der höheren Stoffdichte und des geringeren Wasseranteils die Scherkräfte zwischen den Fasern wesentlich höher sind. Zum Abpumpen muss das Gemisch aber dann auf ca. 5 % Stoffdichte verdünnt werden.

Nach dem Pulper werden die bei der Auflösung entstehenden Spuckstoffe abgetrennt. Daraufhin durchläuft die Fasersuspension einen Entstipper, in dem Faserbündel (Stippen) in ihre Einzelfasern zerlegt werden. Dies geschieht durch Lockerung der äußeren Faserwandschicht und dient zur Erhöhung des Quellgrades der Fasern.

Danach wird die Fasersuspension von Verunreinigungen (Sand, etc.) in einem Reiniger befreit, bevor sie in einen Refiner geleitet wird. Hierin werden die Fasern aufgelockert und gegebenenfalls weiter zerkleinert.

In der anschließenden Mischbütte wird der Faserbrei zum einem mit Wasser aus dem Sieb einer Papiermaschine verdünnt, zum anderen werden auch Füllstoffe hinzugeben. Ob diese Füllstoffe hier oder beim Leimen in der Papiermaschine hinzugeben werden, hängt von der Verwendung des Papieres ab.

Grundsätzlich sollte bei dem Verfahren vermieden werden, dass die Altpapierfasern verkürzt oder beschädigt, insbesondere in Längsrichtung gespalten werden, oder dass der Mahlgrad erhöht wird, da die Altpapierfasern ja bereits mindestens einmal für die Papier-herstellung aufbereitet wurden. Des Weiteren sollten im Altpapier enthaltene Kunststofffolien, Plastikteile, Sand oder Ähnliches möglichst nicht zerkleinert werden, damit sie nachträglich leicht aussortiert werden können.

Gleichwohl lässt sich insbesondere eine weitere Zerkleinerung der Altpapierfasern nicht vollständig vermeiden, so dass die Altpapierfasern nach fünf- bis siebenmaligem Recycling nicht mehr für die Papierherstellung geeignet sind, da sie dann keine ausreichende Länge mehr haben.

Die WO 92/07991 A1 offenbart ein Verfahren zum Zerfasern von trockenen oder nassen Fasermatten mit einer Hammermühle. Die Hammermühle weist einen hohlzylindrischen Stator und einen darin mit hohen Drehzahlen laufenden Rotor auf, der radial in Umfangsrichtung verteilt Hammerplatten trägt, die in Umfangsrichtung an der Innenwand des hohlzylindrischen Stators entlang laufen. Durch Schlitze, die durch bewegliche Walzen verdeckt sind, können Fasermatten in den Stator eingeführt werden. Der Teil der Fasermatte, der in den Stator hineinragt, wird dann von den Hämmern des Rotors abgebrochen. Dabei ist allerdings die Wahrscheinlichkeit hoch, dass nicht nur Fasern vonder eingeführten Fasermatte abgebrochen werden, sondern die Fasern auch selbst dabei brechen. Auch wirkt die Hammerplatte nur einmal auf das abgebrochene Faserstück.

Aus der FR 519 934 A ist ein Defibrator für die Papierherstellung bekannt. Der Defibrator weist eine Wässerungskammer und eine sich daran anschließende Arbeitskammer auf. In der Wässerungskammer wird ein in Form von Bögen einzubringendes Primärmaterial zunächst vollständig befeuchtet und dann durch in der Wässerungskammer vorgesehene Mischerarme zerrieben. In der Arbeitskammer sind helixförmige, mit Zähnen versehene Stege und weitere Mischerarme vorgesehen, mit denen das zerriebene Material weiter verarbeitet wird.

CH 665 233 A5 offenbart ein Verfahren zur Entfernung von Druckfarben aus einem Druckfarbe enthaltenen Sekundärfaser-Ausgangsmaterial. Dieses Verfahren besteht in einem mechanischen Zerfasern des Ausgangsmaterials, das in im wesentlichen trockenem Zustand vorliegt, unter Bildung von einzelnen Fasern und Feinstoffen und in der Abtrennung der Feinstoffe von den Fasern. Die erhaltenen Sekundärfasern eignen sich zur Herstellung von Papier. Als Zerfaserungsvorrichtung wird vorgeschlagen, eine Turbinenmühle, eine Hammermühle, eine Scheiben- bzw. Tellermühle, eine Stiftmühle oder eine Schlagkreuzmühle zu verwenden.

Der vorliegenden Erfindung liegt die Aufgabe zugrunde, eine Verwendung eines Verfahrens zur Aktenvernichtung zur Verfügung zu stellen, bei dem die Verkürzung der Fasern minimiert ist. Diese Aufgabe wird mit den Merkmalen des Anspruchs 1 gelöst. Die Unteransprüche enthalten Merkmale von bevorzugten Ausgestaltungen der erfindungsgemäßen Verwendung.

Unter trockenem Aufschließen wird hier und im Folgenden verstanden, dass das Altpapier nicht innerhalb einer Suspension in Wasser aufgeschlossen wird, also Wasser beim Aufschließen des Altpapiers nicht als Träger und Transportmittel für das Altpapier eingesetzt wird, sondern so aufgeschlossen wird, dass das Altpapier, nachdem es durch Schlagen aufgeschlossen wurde, in Form eines Feststoffgemisches vorliegt.

Es wurde überraschend festgestellt, dass bei einer trockenen Aufschließung unter einer kontinuierlichen Schlageinwirkung die gequollenen Fasern des Altpapiers wesentlich besser geschont werden als bei dem herkömmlichen Aufbereitungsprozess mit Auflösen, Entstippen und Refiner-Mahlung. So werden durch die Schlageinwirkung, insbesondere wenn sie intensiv und pulsierend ist, auf das Altpapier Energieimpulse übertragen, die zu Reibung zwischen den Fasern bzw. zwischen Fasern und Füllstoffen des Altpapiers führen. Hierdurch werden die Fasern voneinander gelöst und unter anderem von Füllstoffen und Schmutz befreit. Gleichzeitig werden die Fasern aufgeraut, wodurch sie sich bei der Papierherstellung besonders gut miteinander vernetzen.

Dies funktioniert insbesondere dann effizient und faserschonend, wenn die im Altpapier enthaltenen Altpapierfasern vor dem Aufschließen bereits gequollen, vorzugsweise vollständig gequollen sind. Hierdurch lassen sich insbesondere die in den Fasern bereits vorhandenen Fibrillen erhalten, so dass auf ein erneutes Fibrillieren, beispielsweise in einem Refiner, verzichtet werden kann. Außerdem kann bei ausreichend hoher Reibung bzw. ausreichend hoher über die Schläge oder Stöße eingebrachter Energie so viel Wärme erzeugt werden, dass das in den gebündelten Fasern enthaltene Wasser kurzzeitig verdampft, die dabei entstehenden Dampfblasen aber wieder kollabieren. Mit der dadurch erzielten harten Kavitation (Dampfschlag) kann das Trennen der Fasern voneinander oder von Zusatz- oder Schmutzstoffen von den wiederzugewinnenden Fasern wesentlich unterstützt werden.

Die Stoffdichte des aufzuschließenden Altpapiers liegt dabei in einem Bereich von 40% bis 99%, vorzugsweise zwischen 50% und 95 % und besonders bevorzugt zwischen 80% oder 85% und 95%. Damit liegt die Stoffdichte ganz deutlich über der Stoffdichte von bis zu 18% bei einer Auflösung des Altpapiers in wässriger Dispersion.

Zur Regelung der Feuchte des Altpapiers während des Aufschließens, aber auch zur Kontrolle der Temperatur während des Aufschließens und darüber hinaus zur Bindung von Staub ist es von Vorteil, wenn am Behälter zum Aufschließen des Altpapiers eine Vorrichtung zum Eindüsen bzw. Einsprühen von Wasser vorgesehen ist. Eine Temperaturregelung erfolgt dabei durch die vom Wasser erzeugte Verdunstungskälte.

Das Altpapier wird vorzugsweise, anders als bei der Beschickung eines Pulpers, ohne Drähte, die die Ballen zusammenhalten, in den Behälter zum Aufschließen eingebracht, da sie nicht benötigt werden. Auf diese Weise kann der üblicherweise anfallende Zopf aus gewundenen Drähten und darin eingefangenen Grobstoffen vermieden werden.

Zur Erzeugung der Schlagwirkung haben sich als besonders effektiv angetriebene Ketten innerhalb eines Behälters herausgestellt, die zentral am Boden des Behälters gelagert sind und sich mit hoher Geschwindigkeit drehen. Das Aufschließen des faserhaltigen Materials erfolgt insbesondere dann besonders schonend, wenn die Kettenglieder nach allen Richtungen hin rund ausgebildet sind, so dass sie keine Ecken oder Kanten aufweisen, mit denen sie das Fasermaterial einkerben könnten. So sind Querstromzerspaner, die unter anderem auch für das Aufschließen von Schrottmaterialien wie beispielsweise von Kühlschränken verwendet werden, für das trockene Aufschließen von Fasermaterial geeignet. Mit einem Querstromzerspaner mit einer Kettenlänge von 40 cm wurden bei 700 - 1700 U/min. hervorragende Ergebnisse erzielt.

Das Verfahren hat unter anderem den Vorteil, dass Zusatzstoffe und Schmutz aus dem Altpapier trocken herausgelöst werden. Das hat zum einen den Vorteil, dass diese nach dem Aufschließen des Altpapiers als trockene Fraktionen von den Fasern getrennt werden können, beispielsweise unter Ausnutzung der unterschiedlichen Partikelträgheit, Partikelgröße oder Partikeldichte, mit Hilfe beispielsweise von Sieben, Windsichtern und/oder Zentrifugen. Dies kann bereits während (über beispielsweise Siebe oder Windsichter) oder aber nach dem Aufschließen erfolgen. Beispielsweise kann im Behälter zum Aufschließen des Fasermaterials seitlich, vorzugsweise nahe des Behälterbodens, ein Fenster mit einem Sieb eingesetzt sein, durch das das aufgeschlossene Fasermaterial aus dem Behälter austreten kann, sobald es auf eine durch das Sieb vorbestimmte Größe zerfasert wurde. Darüber hinaus müssen Zusatzstoffe nicht von dem Prozesswasser getrennt werden, wie es bei einer Aufbereitung des Altpapiers in wässriger Suspension der Fall ist.

Das aufgeschlossene Fasermaterial kann, nachdem es den Behälter zum Aufschließen verlassen hat, über Förderschnecken zu weiteren Verarbeitungsstationen transportiert werden. Sollen während des Transports noch etwaige vorhandene Fremdstoffe aus dem Fasermaterial abgetrennt werden, kann hierfür eine Vibrationsrinne vorgesehen sein.

Um die Qualität der aufbereiteten Fasern für die Herstellung insbesondere von festem Papier zu verbessern, kann dem faserhaltigen Material Kraftfaserpapier zugesetzt werden, dass zusammen mit dem übrigen Fasermaterial aufgeschlossen wird. Kraftfaserpapier enthält besonders lange und stabile Fasern, deren Länge beim erfindungsgemäßen Aufbereiten der Fasern zumindest annähernd vollständig erhalten bleibt. Diese langen Fasern im erzeugten Gemisch aufbereiteter Fasern dienen dann im Papier als eine Art Armierung, die für eine besondere Festigkeit sorgt.

Für die Vorbereitung der mit dem Verfahren gewonnenen Fasern reicht es in aller Regel dann aus, wenn sie in einer nachgelagerten Quellbütte oder Rührbütte mit Wasser vermischt werden, um den Faserbrei für die Papierherstellung bereitzustellen.

Versuche haben gezeigt, dass die so gewonnenen Fasern eine Erhöhung der Altpapierrecyclingzyklen von bisher etwa 7 auf etwa 35 ermöglicht.

Aus dem Verfahren ergeben sich darüber hinaus noch weitere ganz wesentliche Vorteile. Zum einen wird durch den Verzicht auf Wasser als Trägermittel der Energiebedarf deutlich gesenkt, da deutlich weniger Masse beim Aufschließen des Altpapiers bewegt werden muss. So kann bei gleichem Energieaufwand die 18fache Fasermenge (bezogen auf die absolut trockene Fasermenge) durchgesetzt werden. Zwangsläufig ist auch der Wasserbedarf geringer. Auch ist die notwendige Kontaktzeit zwischen dem Altpapier und dem darin enthaltenen Wasser etwa 2 bis 4 Stunden kürzer als bei einem herkömmlichen Verfahren mit einem Pulper. Hierdurch wird die Belastung des Wassers durch in Lösung gehende Störstoffe wie beispielsweise CSB oder Kalzium signifikant verringert.

Es hat sich herausgestellt, dass das Verfahren erfindungsgemäß effizient zur Aktenvernichtung eingesetzt werden kann. Bei Einsatz eines Querstromzerspaners wird das Papier der zu vernichtenden Akten zerfasert und gleichzeitig von anderen Bestandteilen der Akten, beispielsweise von etwaigen Metallteilen oder Kunstsoffen, getrennt. Das Papier wird dabei in seine Fasern zerlegt, so dass etwaige darauf aufgedruckte Informationen unwiederbringlich zerstört werden. Das Verfahren ist jedem herkömmlichen Verfahren zur Aktenvernichtung überlegen und ermöglicht die Aufbereitung des Papiermaterials in Fasern, die unmittelbar zur Papierherstellung wiederverwendet werden können.

Im Folgenden wird die Erfindung anhand zweier Prinzipskizzen, mit denen der Verfahrensablauf bei der Altpapieraufbereitung in wässriger Suspension und der Verfahrensablauf bei der Faseraufbereitung gemäß der Erfindung gegenübergestellt sind, näher erläutert.

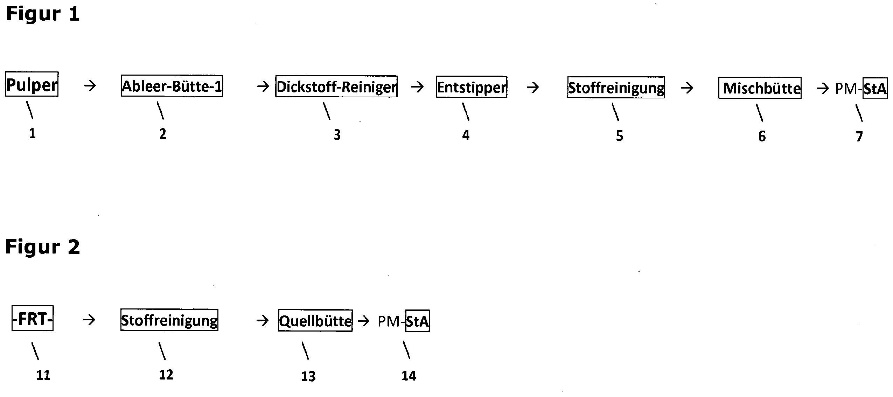

Figur 1 zeigt die wesentlichen Schritte eines herkömmlichen Verfahrens zur Altpapieraufbereitung. Der Pulper 1 wird mit dem aufzubereitenden Fasermaterial und Wasser beschickt, so dass das Fasermaterial aufgelöst wird. In einer nachfolgenden Ableerbütte 2 und einem Dickstoffreiniger 3 wird die aus dem Pulper 1 abgepumpte Suspension von Grobschmutz gereinigt. Die verbleibende Fasermaterialsuspension wird einem Entstipper 4 zugeführt, in dem noch bestehende Faserbündel zu Einzelfasern aufgetrennt und die Fasern zerkleinert werden. In der nachfolgenden Stoffreinigung 5 wird dann Feinschmutz abgetrennt, bevor der verbleibenden gereinigten Fasersuspension nachfolgend in einer Mischbütte 6 die für die Papierherstellung benötigten Zusätze beigemischt werden. Der somit erzeugte Papierbrei wird dann dem Stoffauflauf 7 der Papiermaschine zugeführt.

Der hocheffiziente Prozess sieht demgegenüber lediglich einen FRT (Fiber Refreshing Technology) Reaktor in Form eines Querstromzerspaners 11 vor, in dem feuchtes faserhaltiges Material ohne Wasser als Trägerfluid durch Schlagen zu Einzelfasern aufbereitet wird. In einer nachfolgenden Stoffreinigung 12 können die abgetrennten, weitestgehend trockenen Fraktionen mit geeigneten herkömmlichen Trennverfahren abgetrennt werden. Die somit erzeugten Fasern werden dann in eine Quellbütte oder Rührbütte 13 gegeben, in der die Fasern (erneut) aufquellen können und in der den Fasern je nach Art des herzustellenden Papiers notwendige Zusätze beigemischt werden können. Der in der Quellbütte 13 erzeugte Brei wird dann dem Stoffauflauf 14 einer Papiermaschine zugeführt.

Anhand dieser Gegenüberstellung wird deutlich erkennbar, dass neben den bereits beschriebenen Vorteilen ein weiterer Vorteil darin besteht, dass der Anlagenaufbau deutlich einfacher und platzsparender ist und schon aufgrund der geringeren Anzahl von Verfahrensstufen ein deutlich schnelleres Aufbereitungsverfahren ermöglicht. Damit sind automatisch die Investitionskosten sowie die laufenden Instandhaltungskosten günstiger als die herkömmlicher Aufbereitungsanlagen mit einem Pulper.

## Patentansprüche

1. Verwendung eines Verfahrens zum Aufbereiten und zur Gewinnung von Fasern für die Papierherstellung oder die Herstellung von Dämmstoffen aus einem faserhaltigen Material, nämlich aus Altpapier, bei dem das faserhaltige Material bei einer Stoffdichte von 40% bis 99% unter einer kontinuierlichen Schlageinwirkung in einem Querstromzerspaner aufgeschlossen wird, zur Aktenvernichtung.

2. Verwendung nach Anspruch 1, **gekennzeichnet durch** eine Stoffdichte des aufzuschließenden Fasermaterials von mindestens 50% bis 95 % und besonders bevorzugt von 80% oder 85% bis 95%.

3. Verwendung nach Anspruch 1 oder 2, **dadurch gekennzeichnet, dass** die Feuchte des aufzuschließenden Fasermaterials und/oder die Temperatur und/oder die Staubentwicklung beim Aufschließen des Fasermaterials durch ein Eindüsen bzw. Einsprühen von Wasser gesteuert bzw. geregelt wird.

4. Verwendung nach einem der Ansprüche 1 bis 3, **gekennzeichnet durch** eine Abtrennung von Schmutzfraktionen, insbesondere von Schwerschmutz und von Leichtschmutz während oder nach dem Aufschließen.

5. Verwendung nach Anspruch 4, **gekennzeichnet durch** ein der Abtrennung nachgelagertes Quellen in einer Quellbütte.

6. Verwendung nach einem der Ansprüche 1 bis 5, **dadurch gekennzeichnet, dass** dem aufzubereütenden Fasermaterial Kraftfaserpapier zugesetzt wird, dass zusammen mit dem übrigen Fasermaterial aufgeschlossen wird.

## Claims

1. Use of a method for preparing and obtaining fibres for paper manufacturing or the manufacture of insulating material from a fibre-containing material, namely from waste paper, wherein the fibre-containing material is pulped at a consistency of 40% to 99% by continuous impact action in a cross-flow shredder, for document destruction

2. Use according to claim 1, **characterized by** a consistency of the fibre material to be pulped of at least 50% to 95% and particularly preferably of 80% or 85% to 95%.

3. Use according to claim 1 or 2, **characterized in that** the humidity of the fibre material to be pulped and/or the temperature and/or the dust generation during pulping of the fibre material is or are controlled by injecting or spraying water.

4. Use according to one of claims 1 to 3, **characterized by** a separation of debris fractions, in particular of coarse debris and of fine debris, during or after pulping.

5. Use according to claim 4, **characterized by** soaking in a soaking vat downstream of the separation.

6. Use according to one of claims 1 to 5, **characterized in that** kraft fibre paper is added to the fibre material to be prepared, which kraft fibre paper is pulped together with the other fibre material.

## Revendications

1. Utilisation d'un procédé de préparation et de production de fibres pour la fabrication de papier ou la fabrication de matériaux d'isolation à partir d'un matériau fibreux, en effect à partir de vieux papiers, dans lequel le matériau fibreux est désintégré à une densité en matériau de 40 % à 99 % sous l'effect d'une action de choc continue dans un déchiqueteur à courant transversal, pour la destruction de documents

2. Utilisation selon la revendication 1, **caractérisée par** une densité en matériau du matériau fibreux à désintégrer d'au moins 50 % à 95 % et, de préférence, de 80 % ou de 85 % à 95 %.

3. Utilisation selon la revendication 1 ou 2, **caractérisée en ce que** l'humidité du matériau fibreux à désintégrer et/ou la température et/ou le dégagement de poussière lors de la désintégration du matériau fibreux sont contrôlés ou régulés par une injection ou un arrosage d'eau.

4. Utilisation selon l'une des revendications 1 à 3, **caractérisée par** une séparation des fractions d'impuretés, en particulier d'impuretés lourdes et d'impuretés légères, pendant ou après la désintégration.

5. Utilisation selon la revendication 4, **caractérisée par** un gonflement dans une cuve de gonflement en aval de la séparation.

6. Utilisation selon l'une des revendications 1 à 5, **caractérisée en ce que** du papier kraft à fibres résistantes est ajouté au matériau fibreux à traiter, lequel papier kraft est dissous en même temps que le reste du matériau fibreux.
